# EUROPÄISCHE PATENTSCHRIFT

(11) **EP 0 951 653 B1**
(45) Veröffentlichungstag und Bekanntmachung des Hinweises auf die Patenterteilung: **02.01.2003**
(21) Anmeldenummer: 98963428.2
(22) Anmeldetag: 09.11.1998
(51) Int. Cl.: G01V 8/14

(54) **OPTOELEKTRONISCHE VORRICHTUNG**
OPTOELECTRONIC DEVICE
DISPOSITIF OPTOELECTRONIQUE

(30) Priorität: 07.11.1997 DE 19749199; 10.03.1998 DE 19810231
(43) Veröffentlichungstag der Anmeldung: 27.10.1999
(73) Patentinhaber: Leuze electronic GmbH + Co., D-73277 Owen (DE)
(72) Erfinder: ARGAST, Martin, D-72584 Hülben (DE); FAUTH, Siegfried, D-73230 Kirchheim/Teck (DE); LÖFFLER, Harald, D-42657 Solingen (DE)
(74) Vertreter: Ruckh, Rainer Gerhard, Dr.
(86) Internationale Anmeldenummer: EP9807136
(87) Internationale Veröffentlichungsnummer: WO99024850

(56) Entgegenhaltungen:
- EP-A- 0 310 932
- DE-A- 3 514 643
- DE-A- 4 238 116
- US-A- 4 847 488

## Beschreibung

Die Erfindung betrifft eine optoelektronische Vorrichtung gemäß dem Oberbegriff des Anspruchs 1.

Eine derartige als Reflexionslichtschranke ausgebildete Vorrichtung ist aus der EP-A-0 310 932 bekannt. Diese Reflexionslichtschranke weist einen Sendelichtstrahlen emittierenden Sender auf, welchem ein Polarisator vorgeordnet ist. Weiterhin sind zwei Empfänger vorgesehen, welchen jeweils ein eine Polarisationsebene durchlassender Analysator vorgeordnet ist. Schließlich ist in Abstand zum Sender ein Reflektor vorgesehen.

Die vom Sender emittierten Sendelichtstrahlen sind durch den nachgeordneten Polarisator polarisiert. Dabei wird die Polarisationsebene der Sendelichtstrahlen bei der Reflexion am Reflektor gedreht. Die Polarisationsebene der reflektierten Sendelichtstrahlen bildet die Winkelhalbierende des zwischen den beiden Polarisationsebenen der beiden Analysatoren eingeschlossenen Winkels, der vorzugsweise 90° beträgt.

An den Ausgang jedes Empfängers ist eine Schwellwertschalter angeschlossen. Diese sind an einen Komparator angeschlossen, der die Ausgangssignale der Schwellwertschalter vergleicht. Im Komparator wird nur ein Ausgangssignal generiert, wenn der Unterschied der Ausgangssignale einen vorgegebenen Wert unterschreitet.

Eine weitere Vorrichtung dieser Art ist aus der DE 42 38 116 bekannt. Bei dieser Vorrichtung handelt es sich um eine Reflexionslichtschranke mit zwei Empfängern, denen als polarisierendes Mittel ein strahlteilender, teildurchlässiger Spiegel vorgeordnet ist. Die Polarisationsrichtungen der den teildurchlässigen Spiegel durchsetzenden und auf den ersten Empfänger auftreffenden Empfangslichtstrahlen und der am teildurchlässigen Spiegel reflektierten und auf den zweiten Empfänger auftreffenden Empfangslichtstrahlen sind um 90° gegeneinander gedreht. Zum Nachweis der Objekte im Überwachungsbereich wird die Differenz der an den Ausgängen der Empfänger anstehenden Empfangssignale gebildet. Diese Signaldifferenz wird mittels eines Schwellwerts bewertet.

Der Erfindung liegt die Aufgabe zugrunde, eine Vorrichtung der eingangs genannten Art so auszubilden, dass diese im Bereich des Personenschutzes einsetzbar ist.

Zur Lösung dieser Aufgabe sind die Merkmale der Ansprüche 1 oder 2 vorgesehen. Vorteilhafte Ausführungsformen und zweckmäßige Weiterbildungen der Erfindung sind in den Unteransprüchen 3-19 beschrieben.

Gemäß einer ersten Alternative der Erfindung werden die an den Ausgängen der Empfänger anstehenden Empfangssignale jeweils mit zwei unterschiedlichen Schwellwerten S1 und S2 bewertet, wobei Schwellwert S2 oberhalb von S1 liegt. Der Abstand der Schwellwerte ist so gewählt, dass nur bei freiem Strahlengang das Empfangssignal eines Empfängers oberhalb von S2 und das Empfangssignal des anderen Empfängers unterhalb von S1 liegt. Alternativ können die Ausgangssignale der Empfänger auch jeweils mit einem Schwellwert bewertet werden. In diesem Fall werden die dem Schwellwert zugeführten Empfangssignale mittels Verstärkern unterschiedlich verstärkt, wobei die Differenz der Verstärkungsfaktoren der Differenz der Schwellwerte S1 und S2 entspricht. Prinzipiell wäre es auch denkbar, daß die Empfangssignale der Empfänger bei gleicher Verstärkung jeweils mit demselben Schwellwert bewertet werden. In diesem Fall wäre jedoch keine sichere und eindeutige Unterscheidung der Signale bei freiem Strahlengang und bei einem im Strahlengang befindlichen Objekt möglich.

Dabei liegt das Empfangssignal desjenigen Empfängers oberhalb von S2, dessen polarisierendes Element dieselbe oder nahezu dieselbe Polarisationsrichtung aufweist wie das polarisierende Element der Reflektoreinheit. Das polarisierende Element des anderen Empfängers ist gegenüber der Polarisationsrichtung des polarisierenden Elements der Reflektoreinheit um einen Winkel α, der im Bereich 45° < α < 135° liegt und vorzugsweise 90° beträgt, gedreht. Demzufolge trifft auf diesen Empfänger bei freiem Strahlengang nur eine geringe Lichtmenge.

Mit dieser Vorrichtung können Objekte aller Art, die das auftreffende Sendelicht depolarisieren, sicher erkannt werden. Durch die depolarisierende Wirkung des Objekts treffen auf die Empfänger vergleichbare Lichtmengen.

Reflektiert das Objekt das Licht diffus und nur sehr schwach, so liegen die Empfangssignale beider Empfänger unterhalb des Schwellwerts S1.

Befindet sich ein stark reflektierendes Objekt im Strahlengang, so gelangt eine große Lichtmenge auf die Empfänger, so daß deren Empfangssignale jeweils oberhalb von S2 liegen.

In jedem Fall weichen diese Schaltzustände am Ausgang der Empfänger von den Schaltzuständen bei freiem Strahlengang ab, so daß eine sichere Detektion der Objekte gewährleistet ist.

Gemäß einer weiteren Alternative der Erfindung wird der Quotient der an den Ausgängen der Empfänger anstehenden Signale gebildet. Durch die Quotientenbildung werden systematische Meßfehler, die durch unterschiedliche Ausdehnungen des Überwachungsbereichs entstehen, eliminiert. Dies bevorzugt eine Quotientenbildung der Empfangssignale gegenüber einer Differenzbildung, die ebenfalls prinzipiell denkbar wäre. Der Quotient der Empfangssignale wird mit einem Schwellwert S bewertet. Dieser Schwellwert S ist so gewählt, daß sich bei freiem Strahlengang der Vorrichtung ein anderer Schaltzustand ergibt als bei einem im Strahlengang befindlichen Objekt, und zwar unabhängig von dessen Reflexionseigenschaften. Zusätzlich werden die Empfangssignale der Empfänger einzeln mit dem Schwellwert S1 bewertet.

Die erfindungsgemäße Vorrichtung weist zudem Mittel zur Testung auf. Damit kann die Funktionsfähigkeit des Senders und der Empfänger zyklisch oder in vorgegebenen Intervallen überprüft werden. Die Überprüfung erfolgt derart, daß im fehlerfreien Betrieb bei Betätigen der Mittel zur Testung die Empfangssignale der Empfänger vorgegebene Schaltzustände bezüglich der Schwellwerte S1 und S2 bzw. des Schwellwerts S einnehmen müssen.

Durch diese Überprüfung können interne Gerätestörungen sofort erkannt und angezeigt werden. Bei Anwendungen im Bereich des Personenschutzes wird die Vorrichtung üblicherweise zur Überwachung einer Maschine oder dergleichen eingesetzt. Tritt ein interner Gerätefehler in der Vorrichtung auf, so wird aus Sicherheitsgründen die Maschine abgeschaltet.

Die Erfindung wird im nachstehenden anhand der Zeichnungen erläutert. Es zeigen:
- Figur 1:: Schematische Darstellung eines Ausführungsbeispiels der erfindungsgemäßen Vorrichtung bei eingeschaltetem Sender,
- Figur 2:: Vorrichtung gemäß Figur 1 bei ausgeschaltetem Sender und eingeschaltetem Testsender,
- Figur 3:: Impulsdiagramm für den Betrieb des Senders, des Testsenders und der Empfänger,
- Figur 4:: Schematische Darstellung der Intensitätsverläufe der Sende- und Empfangslichtstrahlen bei freiem Strahlengang,
- Figur 5:: Schematische Darstellung der Intensitätsverläufe der Sende- und Empfangslichtstrahlen bei einem im Strahlengang angeordneten spiegelnden Objekt,
- Figur 6:: Schematische Darstellung der Intensitätsverläufe der Sende- und Empfangslichtstrahlen bei einem im Strahlengang angeordneten diffus reflektierenden Objekt.

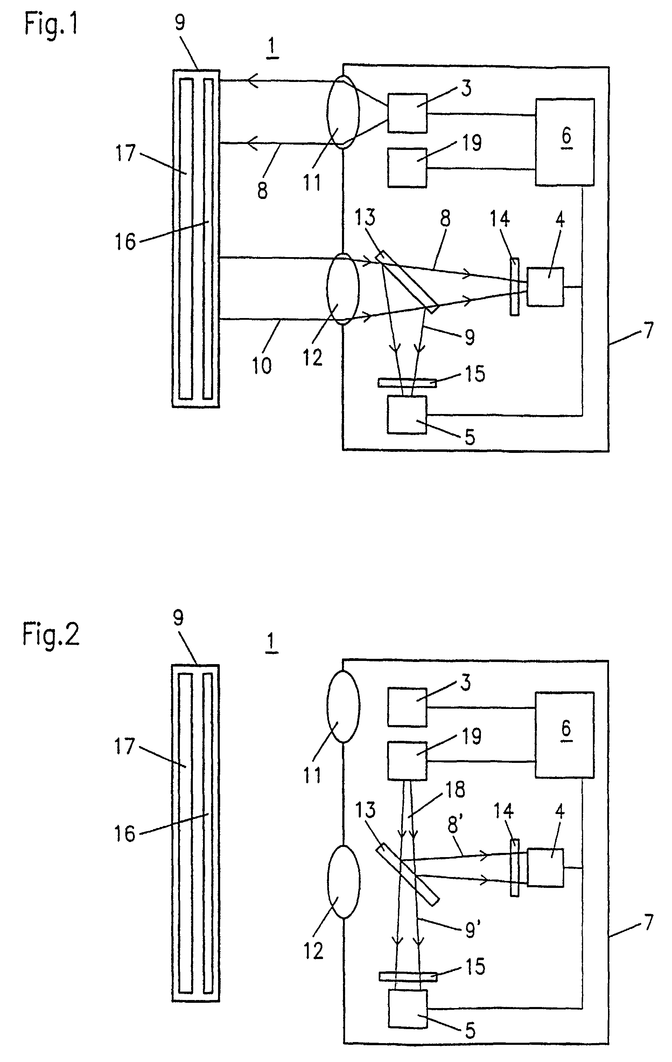

Die Figuren 1 und 2 zeigen ein erstes Ausführungsbeispiel einer optoelektronischen Vorrichtung 1 zum Erfassen von Objekten 2 in einem Überwachungsbereich. An einem Ende des Überwachungsbereichs sind ein Sender 3 und zwei Empfänger 4, 5 angeordnet, die an eine gemeinsame Auswerteeinheit 6 angeschlossen und in einem Gehäuse 7 integriert sind. Der Sender 3 ist vorzugsweise von einer Leuchtdiode gebildet und wird im Pulsbetrieb betrieben. Alternativ kann der Sender 3 von einem Laser gebildet sein. Die Empfänger 4, 5 sind von vorzugsweise baugleichen Photodioden gebildet. Die Auswerteeinheit 6 besteht aus einem Microcontroller oder ist in einem ASIC integriert.

Bei freiem Strahlengang werden die vom Sender 3 emittierten Sendelichtstrahlen 8 auf eine am gegenüberliegenden Ende des Überwachungsbereichs angeordnete Reflektoreinheit 9 geführt. Die von dort reflektierten Empfangslichtstrahlen 10 sind auf die Empfänger 4, 5 geführt.

In der Frontwand des Gehäuses 7 ist eine Sendeoptik 11 angebracht, durch welche die Sendelichtstrahlen 8 geführt sind. Zudem ist in der Gehäusewand eine Empfangsoptik 12 vorgesehen, die von den Empfangslichtstrahlen 10 durchsetzt wird. Die Sende- 11 und Empfangsoptik 12 sind jeweils von einer Linse gebildet.

Zwischen der Empfangsoptik 12 und den Empfängern 4, 5 ist ein strahlteilender, teildurchlässiger Spiegel 13 vorgesehen, dessen Frontfläche und Rückseite jeweils um 45° gegenüber der Strahlachse der auftreffenden Empfangslichtstrahlen 10 geneigt sind. Die die Empfangsoptik 12 durchsetzenden Empfangslichtstrahlen 10 treffen auf die Frontseite des teildurchlässigen Spiegels 13. Ein Teil der Empfangslichtstrahlen 10 durchsetzt den teildurchlässigen Spiegel 13 und trifft auf den dahinter angeordneten ersten Empfänger 4. Der restliche Teil der Empfangslichtstrahlen 10 wird am teildurchlässigen Spiegel 13 reflektiert und trifft auf den zweiten Empfänger 5.

Jedem Empfänger 4, 5 ist ein linear polarisierendes Element 14, 15 vorgeordnet, welches vorzugsweise als Polarisationsfilter ausgebildet ist.

In einer weiteren nicht dargestellten Ausführungsform der Erfindung ist dem teildurchlässigen Spiegel 13 ein Umlenkelement vorgeordnet. An diesem Umlenkelement werden die Sendelichtstrahlen 8 so umgelenkt, daß diese koaxial zu den Empfangslichtstrahlen 10 im Überwachungsbereich geführt werden. Zweckmäßigerweise besteht das Umlenkelement aus einem weiteren teildurchlässigen Spiegel 13, dessen Spiegelfläche parallel zur Spiegelfläche des ersten teildurchlässigen Spiegels 13 verläuft. Der Sender 3 ist unterhalb des zweiten teildurchlässigen Spiegels 13 angeordnet. In diesem Fall wird nur noch eine Linse benötigt, die gleichzeitig die Sende- 3 und Empfangslichtstrahlen 10 fokussiert.

Die Reflektoreinheit 9 weist ebenfalls ein weiteres linear polarisierendes Element 16 auf, welches unmittelbar vor einem Reflektor 17 angeordnet ist, der als Trippelreflektor oder als Reflexfolie ausgebildet sein kann. Prinzipiell kann anstelle eines Reflektor 17 auch ein Spiegel verwendet werden.

Die Polarisationsrichtung der polarisierenden Elemente 14, 16 in der Reflektoreinheit 9 und am ersten Empfänger 4 stimmen im wesentlichen, vorzugsweise mit einer Winkeldifferenz kleiner als 10°, überein. Im vorliegenden Ausführungsbeispiel stimmen die Polarisationsrichtungen exakt überein. Die Polarisationsrichtung des polarisierenden Elements 15 am zweiten Empfänger 5 ist hierzu um einen Winkel α gedreht, der im Bereich 45° < α < 135° liegt. Im vorliegenden Ausführungsbeispiel beträgt der Winkel α = 90°.

Ist der Sender 3 von einem Laser gebildet, so sind die Sendelichtstrahlen 8 linear polarisiert. Dabei ist deren Polarisationsrichtung um 45° gegenüber der Polarisationsrichtung des polarisierenden Elements 16 gedreht.

Die an den Ausgängen der Empfänger 4, 5 anstehenden Empfangssignale werden jeweils mit zwei Schwellwerten S1 und S2 bewertet, wobei der Schwellwert S2 oberhalb von S1 liegt. Die Lage der Empfangssignale der Empfänger 4, 5 relativ zu den Schwellwerten S1 und S2 definiert den Schaltzustand der Vorrichtung 1.

Die Schwellwerte sind in Abhängigkeit der Polarisationsrichtungen der polarisierenden Elemente 14, 15 gewählt.

Insbesondere ist der Abstand zwischen den Schwellwerten S1 und S2 so gewählt, daß nur bei freiem Strahlengang das Empfangssignale des ersten Empfänger 4 oberhalb von S2 liegt und gleichzeitig das Empfangssignal des zweiten Empfängers 5 unterhalb von S1 liegt. Dies wird dadurch erreicht, daß der Schwellwert S2 etwa 10% unterhalb des Empfangspegels des ersten Empfängers 4 bei freiem Strahlengang liegt und der Schwellwert S1 etwa 80% unterhalb dieses Empfangspegels liegt.

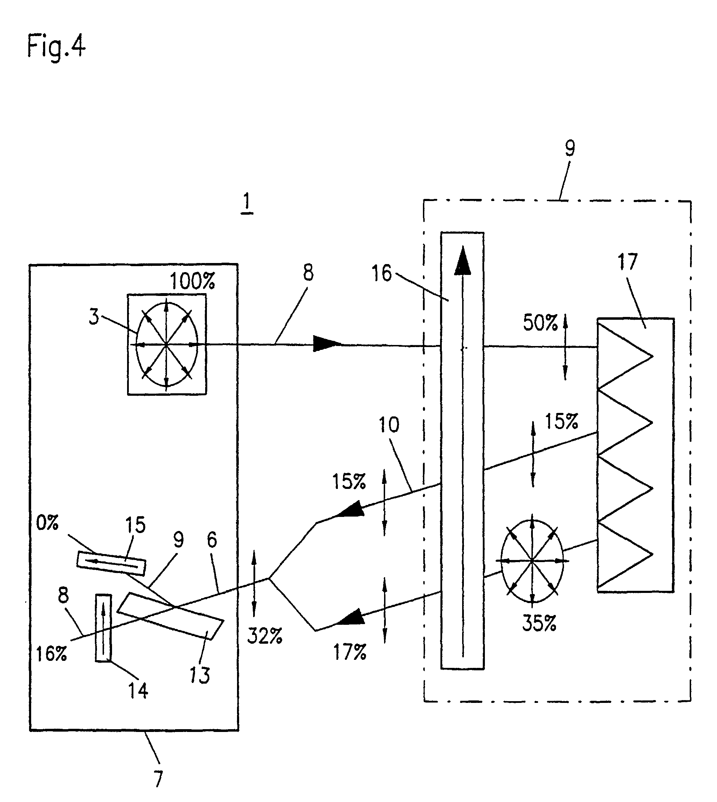

In den Figuren 4 - 6 sind die Lichtleistungen und die Polarisationsrichtungen entlang der Strahlengänge der Sende- 8 und Empfangslichtstrahlen 10 dargestellt. Dabei sind eventuelle Dämpfungsverluste beim Durchgang durch die optischen Elemente vernachlässigt.

In Figur 4 ist die optoelektronische Vorrichtung 1 bei freiem Strahlengang dargestellt. Die vom Sender 3 emittierten Sendelichtstrahlen 8 sind unpolarisiert, was durch die gleichmäßige Verteilung der Pfeile veranschaulicht ist. Die vom Sender 3 emittierte Sendeleistung wird als Bezugspunkt für den weiteren Strahlverlauf genommen und mit 100% angesetzt.

Die Sendelichtstrahlen 8 treffen auf das linear polarisierende Element 16 der Reflektoreinheit 9, dessen Polarisationsrichtung mit einem vertikalen Pfeil veranschaulicht ist.

Nur der in dieser Polarisationsrichtung polarisierte Teil des Sendelichts durchdringt das polarisierende Element 16. Dieser Teil beträgt etwa 50% der ursprünglichen Sendeleistung.

Die Sendelichtstrahlen 8 treffen dann auf den Reflektor 17 und werden dort reflektiert, wobei diese dabei zum Teil depolarisiert werden. Bei dem in Figur 4 dargestellten Fall wird ein Anteil von 35% depolarisiert, während ein Anteil von 15% die Polarisationsrichtung beibehält. Beim zweiten Durchtritt durch das polarisierende Element 16 wird dieser Anteil nicht geschwächt, da dessen Polarisationsrichtung mit der Polarisationsrichtung des polarisierenden Elements 16 übereinstimmt. Der depolarisierte Anteil wird dagegen von 35% auf 17% geschwächt. Somit gelangt von der ursprünglich emittierten Sendeleistung ein Anteil von 32% linear polarisiertem Licht auf den teildurchlässigen Spiegel 13, wobei die Sendelichtstrahlen 8 je zur Hälfte reflektiert werden und den Spiegel 13 durchdringen.

Der den Spiegel 13 durchdringende Anteil der Empfangslichtstrahlen 10 trifft auf das polarisierende Element des ersten Empfängers 4, dessen Polarisationsrichtung mit derjenigen der Sendelichtstrahlen 8 übereinstimmt, so daß diese ohne weitere Schwächung durch das erste polarisierende Element 14 auf den ersten Empfänger 4 gelangen. Dieser Anteil beträgt 16% der ursprünglichen Sendeleistung.

Die Polarisationsrichtung des polarisierenden Elements 15 vor dem zweiten Empfänger 5 ist um 90° bezüglich der auftreffenden Empfangslichtstrahlen 10 gedreht, so daß kein Empfangslicht auf den zweiten Empfänger 5 trifft.

Entsprechend der auf die Empfänger 4, 5 auftreffenden Lichtmengen liegt das Empfangssignal am Ausgang des ersten Empfängers 4 oberhalb des Schwellwerts S2 und das Empfangssignal am Ausgang des zweiten Empfängers 5 unterhalb des Schwellwerts S1.

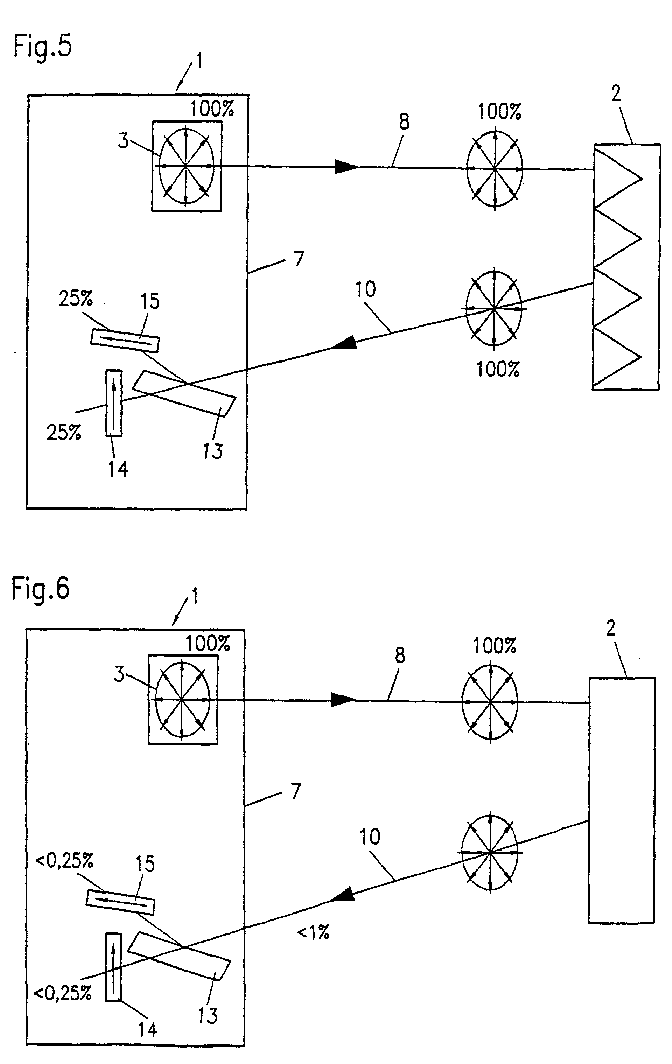

Bei dem in Figur 5 dargestellten Fall ist ein hochreflektierendes Objekt 2 im Strahlengang vor der nicht dargestellten Reflektoreinheit 9 angeordnet. Das Objekt 2 ist von einem Reflektor 17 gebildet, an welchem die vom Sender 3 emittierten Sendelichtstrahlen 8 nahezu ohne Verlust reflektiert werden. Die vom Sender 3 emittierten depolarisierten Sendelichtstrahlen 8 bleiben auch nach der Reflexion am Reflektor 17 depolarisiert.

Die am Reflektor 17 reflektierten Empfangslichtstrahlen 10 treffen auf den teildurchlässigen Spiegel 13, wobei von dort jeweils gleiche Anteile des Empfangslichts in Richtung der beiden Empfänger 4, 5 geführt sind. Da das Empfangslicht depolarisiert ist, wird es beim Durchtritt durch die polarisierenden Elemente 14, 15 jeweils um etwa 50% geschwächt. Daher treffen auf die Empfänger 4, 5 jeweils etwa 25% der ursprünglichen Sendeleistung.

Dies führt zu Empfangssignalen an den Empfängern 4, 5, welche jeweils oberhalb der Schwellwerte S2 liegen. Diese Empfangssignale unterscheiden sich eindeutig von den Schaltzuständen bei freiem Strahlengang, so daß eine sichere Detektion des Objekte 2 gewährleistet ist.

Bei dem in Figur 6 dargestellten Fall ist ein diffus reflektierendes Objekt 2 im Strahlengang vor der nicht dargestellten Reflektoreinheit 9 angeordnet. Von dem auf das Objekt 2 auftreffenden Sendelicht wird bedingt durch die diffuse Reflexion nur ein kleiner Anteil, typischerweise unterhalb von 1% der ursprünglich emittierten Sendelichtleistung, von der Empfangsoptik 12 erfaßt. Entsprechend gering sind die auf die Empfänger 4, 5 auftreffenden Lichtmengen. Ansonsten entspricht der Strahlengang, insbesondere auch hinsichtlich der Polarisationsverhältnisse, dem in Figur 5 dargestellten Fall.

Da auf die Empfänger 4, 5 jeweils nur ein Anteil von weniger als 0,25% der ursprünglich emittierten Sendelichtleistung trifft, liegen die Empfangssignale jeweils unterhalb des Schwellwerts S1. Auch diese Schaltzustände unterscheiden sich eindeutig von den Schaltzuständen bei freiem Strahlengang, so daß auch in diesem Fall eine sichere Objekterkennung gewährleistet ist.

Gemäß einer weiteren nicht dargestellten Alternative der Erfindung wird in der Auswerteeinheit 6 der Quotient der Empfangssignale gebildet. Im vorliegenden Fall wird der Wert des am Empfänger 4 anstehenden Empfangssignales durch den Wert des am Empfänger 5 anstehenden Empfangssignals dividiert. Bei freiem Strahlengang ergibt sich für den Quotienten ein Zahlenwert mit x >> 1. Ist ein Objekt 2 mit beliebigem Reflexionsgrad im Strahlengang angeordnet, so ergibt sich für den Quotienten ein Zahlenwert im Bereich x = 1 . Um eine sichere Detektion der Objekte 2 zu gewährleisten, liegt die Höhe des Schwellwerts etwa im Bereich 2 < S ≤ 10. Demzufolge ist gewährleistet, daß der Schwellwert S nur bei freiem Strahlengang überschritten wird. Zusätzlich werden die Empfangssignale der Empfänger 4, 5 einzeln mit dem Schwellwert S1 bewertet.

Zur Überprüfung der Funktionssicherheit der Vorrichtung 1 sind Mittel zur Testung vorgesehen. Durch Betätigen dieser Mittel nehmen bei fehlerfreiem Betrieb der Vorrichtung 1 die Empfangssignale der Empfänger 4, 5 vorgegebenen Schaltzustände bezüglich der Schwellwerte S1 und S2 bzw. bezüglich des Schwellwerts S an, was in der Auswerteeinheit 6 abgeprüft wird.

Diese Testung kann zyklisch erfolgen, wobei die Testung von der Auswerteeinheit 6 innerhalb vorgegebener Zeitintervalle, die im Bereich von msec liegen, periodisch aktiviert wird. Eine derartige zyklische Testung erfolgt dann, wenn die Sicherheitsanforderungen an die Vorrichtung 1 besonders hoch sind.

Sind die Sicherheitsanforderungen an die Vorrichtung 1 weniger hoch, so kann die Testung innerhalb größerer Zeitintervalle, die typischerweise im Bereich von Stunden liegen, erfolgen. Dabei wird die Testung vorzugsweise durch ein externes an die Vorrichtung 1 angeschlossenes Schaltgerät ausgelöst. Die Testung kann zweckmäßigerweise dann erfolgen, wenn die Vorrichtung 1 und /oder die Maschine, an welche die Vorrichtung 1 zu Überwachungszwecken angeschlossen ist, gewartet wird oder außer Betrieb ist.

Bei dem in den Figuren 1 und 2 dargestellten Ausführungsbeispiel ist als Mittel zur Testung ein Testsendelichtstrahlen 18 emittierender Testsender 19 vorgesehen. Die Testsendelichtstrahlen 18 verlaufen vollständig im Inneren des Gehäuses 7 und sind über den strahlteilenden, teildurchlässigen Spiegel 13 auf die Empfänger 4, 5 geführt. Dabei treffen die Testsendelichtstrahlen 18 auf die Rückseite des teildurchlässigen Spiegels 13. Von dort wird ein Anteil von etwa 50% der Testsendelichtstrahlen 18 zum ersten Empfänger 4 reflektiert. Der andere Teil der Testsendelichtstrahlen 18 durchsetzt den teildurchlässigen Spiegel 13 und trifft auf den zweiten Empfänger 5.

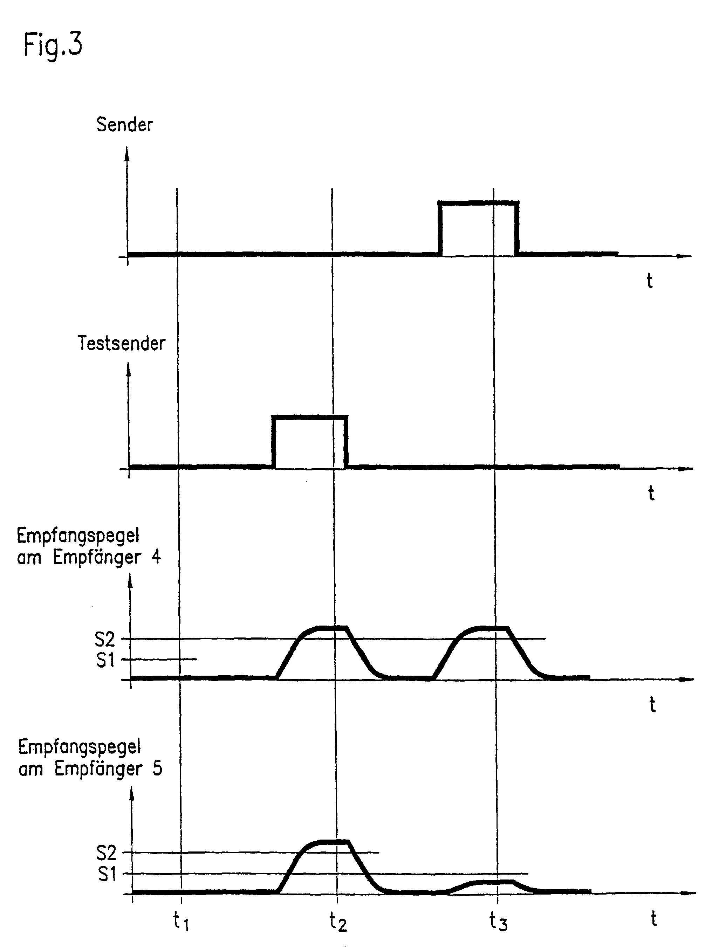

Die Durchführung der Testung ist in Figur 3 veranschaulicht. Während der Testung bleibt der Sender 3 vorzugsweises ausgeschaltet. Alternativ könnte der Sender 3 auch eingeschaltet bleiben, da er die Wirkung des Testsenders 19 nur verstärkt und nicht stört. Die Testung untergliedert sich in zwei Testmessungen. Bei der ersten Testmessung (t₁) wird nicht nur der Sender 3, sondern auch der Testsender 19 abgeschaltet. Da dann von der Vorrichtung 1 keinerlei Licht emittiert wird, müssen bei fehlerfreiem Betrieb die Empfangssignale der Empfänger 4, 5 jeweils unterhalb des Schwellwerts S1 liegen. Im Idealfall nehmen die Pegel der Empfangssignale den Wert Null an.

Im Realfall liegen die Empfangssignalpegel oberhalb des Nullpegels. Dies beruht vorwiegend auf dem Rauschen der Empfänger 4, 5.

Liegt im Fehlerfall eines der Empfangssignale oberhalb des Schwellwerts S1, so ist der entsprechende Empfänger 4 oder 5 defekt. Handelt es sich um den ersten Empfänger 4, so ist eventuell auch der Sender 3 nicht ausschaltbar, da diese Signalkombination dem Betrieb der Vorrichtung 1 bei freiem Strahlengang entspricht. Liegen beide Empfangssignale oberhalb der Schwellwerte S1 und S2, so läßt sich der Sender 3 oder der Testsender 19 nicht ausschalten und /oder beide Empfänger 4, 5 sind defekt.

Während der zweiten Testmessung (t₂) ist der Sender 3 ausgeschaltet und der Testsender 19 eingeschaltet. Der Testsender 19 emittiert dabei unpolarisierte Testsendelichtstrahlen 18, die zu gleichen Anteilen über den strahlteilenden Spiegel 13 auf die Empfänger 4, 5 geführt sind. Da es sich um depolarisiertes Licht handelt werden die Testsendelichtstrahlen 18 bei Durchgang durch die polarisierenden Elemente 14, 15 gleichermaßen geschwächt. Die Sendeleistung ist so gewählt, daß im fehlerfreien Fall die Empfangssignale beider Empfänger 4, 5 oberhalb des Schwellwerts S2 liegen.

Liegt das Empfangssignal eines Empfängers 4, 5 unterhalb dieses Schwellwerts S2, so ist dieser Empfänger 4 oder 5 defekt.

Durch Verknüpfung der Ergebnisse beider Testmessungen läßt sich somit feststellen, ob der Sender 3 bzw. der Testsender 19 oder einer der Empfänger 4, 5 defekt ist.

Nach Abschluß der Testmessungen wechselt die Vorrichtung 1 wieder in den Arbeitsbetrieb. Dort ist der Sender 3 eingeschaltet und der Testsender 19 ausgeschaltet. Unter t₃ in Figur 3 ist dieser Fall bei freiem Strahlengang dargestellt.

In einem weiteren nicht dargestellten Ausführungsbeispiel ist als Mittel zur Testung anstelle des Testsenders 19 vor dem Empfänger 4, 5 ein polarisierendes Element 15 vorgesehen, dessen polarisierende Wirkung veränderbar ist.

Im vorliegenden Ausführungsbeispiel besteht dieses polarisierende Element 15 aus einem Flüssigkristallelement. Durch Anlegen unterschiedlicher Spannungen kann das Flüssigkristallelement zwischen zwei Zuständen umgeschaltet werden. Im ersten Zustand wirkt das Flüssigkristallelement linear polarisierend. Dieser Zustand wird während der Arbeitsphase eingenommen, in welcher der Sender 3 aktiviert ist. Dieser Fall entspricht beispielsweise dem Zustand der Vorrichtung 1 bei t₃ in Figur 3.

Während der Testung wechselt das Flüssigkristallelement in den zweiten Zustand. In diesem Zustand hat das Flüssigkristallelement keine polarisierende Wirkung mehr.

Die Testung erfolgt wiederum in zwei getrennten Testmessungen. Die erste Testmessung erfolgt analog zum ersten Ausführungsbeispiel bei abgeschaltetem Sender 3. Entsprechend müssen die Empfangssignale der Empfänger 4, 5 im fehlerfreien Zustand unterhalb von S1 liegen.

Während der zweiten Testmessung ist der Sender 3 aktiviert. Die Testmessung erfolgt zweckmäßigerweise bei freiem Strahlengang. Die Intensitätsverhältnisse und Polarisationsrichtungen der Sende- 8 und Empfangslichtstrahlen 10 entsprechen im wesentlichen dem in Figur 4 dargestellten Fall. Lediglich werden die Empfangslichtstrahlen 10 beim Durchgang durch das vom Flüssigkristallelement gebildeten polarisierenden Element 15 nicht mehr geschwächt. Entsprechend gelangt auf diesen Empfänger 5 dieselbe Lichtmenge wie auf den anderen Empfänger 4. Somit liegen die Empfangssignale der beiden Empfänger 4, 5 im fehlerfreien Fall oberhalb des Schwellwerts S2.

Die Auswertung, ob im Fehlerfall der Sender 3 oder einer der Empfänger 4, 5 defekt ist, erfolgt analog zum ersten Ausführungsbeispiel.

Gemäß der zweiten Alternative der Erfindung werden die Testmessungen wie folgt durchgeführt. Während der ersten Testmessung (t1) müssen bei fehlerfreiem Betrieb die Empfangssignale der Empfänger 4, 5 jeweils unterhalb des Schwellwerts S1 liegen. Während der zweiten Testmessung (t2) wird der Quotient der Empfangssignale mit dem Schwellwert S bewertet. Der Quotient der Empfangssignale der Empfänger 4, 5 liegt dann bei eingeschaltetem Testsender 19 unterhalb des Schwellwerts S.

## Patentansprüche

1. Optoelektronische Vorrichtung (1) zum Erfassen von Objekten (2) in einem Überwachungsbereich, an dessen einem Ende ein Sendelichtstrahlen (8) emittierender Sender (3) und zwei Empfangslichtstrahlen (10) empfangende Empfänger (4, 5) mit jeweils einem vorgeordneten ersten und zweiten linear polarisierenden Element (14, 15), deren Polarisationsrichtungen um einen Winkel α im Bereich 45° < α < 135° gegeneinander gedreht sind, angeordnet sind, und an dessen anderem Ende eine Reflektoreinheit (9), bestehend aus einem Reflektor (17) und einem vorgeordneten dritten linear polarisierenden Element (16), dessen Polarisationsrichtung mit der Polarisationsrichtung des ersten oder zweiten polarisierenden Elements (14, 15) im wesentlichen übereinstimmt, angeordnet ist, **dadurch gekennzeichnet, dass** die an Ausgängen der Empfänger (4, 5) anstehenden Empfangssignale jeweils mit zwei unterschiedlichen Schwellwerten S1 und S2 bewertet werden, wobei der Schwellwert S2 oberhalb des Schwellwerts S1 liegt, und deren Abstand so gewählt ist, dass nur bei freiem Strahlengang das Empfangssignal eines Empfängers (4) oberhalb von S2 und das Empfangssignal des zweiten Empfängers (5) unterhalb von S1 liegt, und dass Mittel (19) zur Testung der Vorrichtung (1) vorgesehen sind, durch deren Betätigung bei fehlerfreiem Betrieb die Empfangssignale der Empfänger (4, 5) vorgegebene Schaltzustände bezüglich der Schwellwerte S1 und S2 einnehmen.

2. Optoelektronische Vorrichtung (1) zum Erfassen von Objekten (2) in einem Überwachungsbereich, an dessen einem Ende ein Sendelichtstrahlen (8) emittierender Sender (3) und zwei Empfangslichtstrahlen (10) empfangende Empfänger (4, 5) mit jeweils einem vorgeordneten ersten und zweiten linear polarisierenden Element (14, 15), deren Polarisationsrichtungen um einen Winkel α im Bereich 45° < α < 135° gegeneinander gedreht sind, angeordnet sind, und an dessen anderem Ende eine Reflektoreinheit (9), bestehend aus einem Reflektor (17) und einem vorgeordneten dritten linear polarisierenden Element (16), dessen Polarisationsrichtung mit der Polarisationsrichtung des ersten oder zweiten polarisierenden Elements (14, 15) im wesentlichen übereinstimmt angeordnet ist, **dadurch gekennzeichnet, dass** der Quotient der an den Ausgängen der Empfänger (4, 5) anstehenden Empfangssignale gebildet wird und dieser mit einem Schwellwert S bewertet wird, und dass Mittel (19) zur Testung der Vorrichtung (1) vorgesehen sind, durch deren Betätigung bei fehlerfreiem Betrieb der Quotient der Empfangssignale bezüglich des Schwellwerts S einen vorgegebenen Wert annimmt.

3. Optoelektronische Vorrichtung nach Anspruch 1 oder 2, **dadurch gekennzeichnet, dass** die Testung zyklisch erfolgt.

4. Optoelektronische Vorrichtung nach einem der Ansprüche 1 - 3, **dadurch gekennzeichnet, dass** die Testung durch externes Aktivieren der Mittel (19) zur Testung erfolgt.

5. Optoelektronische Vorrichtung nach einem der Ansprüche 1 - 4, **dadurch gekennzeichnet, dass** die Polarisationsrichtungen des ersten und zweiten polarisierenden Elements (14, 15) um α = 90° gegeneinander gedreht sind.

6. Optoelektronische Vorrichtung nach Anspruch 5, **dadurch gekennzeichnet, dass** die Empfangslichtstrahlen (10) über einen strahlteilenden teildurchlässigen Spiegel (13) zu den Empfängern (4, 5) geführt sind.

7. Optoelektronische Vorrichtung nach Anspruch 6, **dadurch gekennzeichnet, dass** vor dem teildurchlässigen Spiegel (13) ein Umlenkelement angeordnet ist, an welchem die Sendelichtstrahlen (8) reflektiert werden, so dass sie parallel zu den Empfangslichtstrahlen (10) im Überwachungsbereich geführt sind.

8. Optoelektronische Vorrichtung nach Anspruch 7, **dadurch gekennzeichnet, dass** das Umlenkelement von einem teildurchlässigen Spiegel (13) gebildet ist.

9. Optoelektronische Vorrichtung nach einem der Ansprüche 1 - 8, **dadurch gekennzeichnet, dass** zu deren Testung ein Testsender (19) vorgesehen ist, dessen Testsendelichtstrahlen (18) auf die Empfänger (4, 5) gerichtet sind.

10. Optoelektronische Vorrichtung nach einem der Ansprüche 7 - 9, **dadurch gekennzeichnet, daß** die vom Testsender (19) emittierten Testsendelichtstrahlen (18) über den teildurchlässigen Spiegel (13) zu den Empfängern (4, 5) geführt sind.

11. Optoelektronische Vorrichtung nach Anspruch 9 oder 10, **dadurch gekennzeichnet, daß** während der Testung der Sender (3) abgeschaltet ist.

12. Optoelektronische Vorrichtung nach Anspruch 10 oder 11, **dadurch gekennzeichnet, daß** bei deren fehlerfreiem Betrieb während einer ersten Testmessung bei abgeschaltetem Sender (3) und Testsender (19) die Empfangssignale der Empfänger (4, 5) jeweils unterhalb des Schwellwerts S1 liegen.

13. Optoelektronische Vorrichtung nach einem der Ansprüche 10 - 12, **dadurch gekennzeichnet, daß** bei deren fehlerfreiem Betrieb während einer zweiten Testmessung bei abgeschaltetem Sender (3) und eingeschaltetem Testsender (19) die Empfangssignale der Empfänger (4, 5) jeweils oberhalb des Schwellwerts S2 liegen oder der Quotient der Empfangssignale der Empfänger (4, 5) unterhalb des Schwellwerts S liegt, wobei das Empfangssignal des Empfängers (4) durch das Empfangssignal des Empfängers (5) dividiert wird.

14. Optoelektronische Vorrichtung nach einem der Ansprüche 1 - 8, **dadurch gekennzeichnet, daß** zu deren Testung die Polarisationswirkung des polarisierenden Elements (15) vor dem Empfänger (5) veränderbar ist.

15. Optoelektronische Vorrichtung nach Anspruch 14, **dadurch gekennzeichnet, daß** das polarisierende Element (15) von einem Flüssigkristallelement gebildet ist

16. Optoelektronische Vorrichtung nach Anspruch 14 oder 15, **dadurch gekennzeichnet, daß** bei den Testmessungen die Polarisationswirkung des polarisierenden Elements (15) aufgehoben ist.

17. Optoelektronische Vorrichtung nach Anspruch 16, **dadurch gekennzeichnet, daß** bei deren fehlerfreiem Betrieb während einer ersten Testmessung bei abgeschaltetem Sender (3) die Empfangssignale der Empfänger (4, 5) unterhalb des Schwellwerts S1 liegen und während einer zweiten Testmessung bei eingeschaltetem Sender (3) und freiem Strahlengang oberhalb von S2 liegen, oder daß der Quotient der Empfangssignale der Empfänger (4, 5) während der zweiten Testmessung unterhalb des Schwellwerts S liegt wobei das Empfangssignal des Empfängers (4) durch das Empfangssignal des Empfängers (5) dividiert wird.

18. Optoelektronische Vorrichtung nach einem der Ansprüche 1 - 17, **dadurch gekennzeichnet, daß** der Sender (3) von einer Leuchdiode gebildet ist.

19. Optoelektronische Vorrichtung nach einem der Ansprüche 1 - 17, **dadurch gekennzeichnet, daß** der Sender (3) von einem Laser gebildet ist, wobei die Polarisationsrichtung der vom Laser emittierten Sendelichtstrahlen (8) etwa um 45° bezüglich der Polarisationsrichtung des linear polarisierenden Elements (16) der Reflektoreinheit (9) gedreht ist

## Claims

1. Optoelectronic device (1) for the detection of objects (2) in a monitoring region, at one end of which there are arranged a transmitter (3) transmitting a transmitted light beam (8) and two receivers (4, 5) - which each receive received light beams (10) - each with a respective upstream first and second linearly polarising element (14, 15), the polarisation directions of the elements being rotated relative to one another through an angle α in the range 45° < α < 135°, and at the other end of which there is arranged a reflector unit (9) consisting of a reflector (17) and an upstream third linearly polarising element (16), the polarisation direction of which substantially corresponds with the polarisation direction of the first or second polarising element (14, 15), **characterised in that** the received signals present at outputs of the receivers (4, 5) are evaluated in each instance by two different threshold values S1 and S2, wherein the threshold value S2 lies above the threshold value S1 and the spacing thereof is so selected that the received signal of one receiver (4) lies above S2 and the received signal of the second receiver (5) lies below S1 only in the case of a free beam path and that means (18) for testing the device (1) are provided by the actuation of which the received signals of the receivers (4, 5) take up predetermined switching states with respect to the threshold values S1 and S2 in the case of fault-free operation.

2. Optoelectronic device (1) for the detection of objects (2) in a monitoring region, at one end of which there are arranged a transmitter (3) transmitting a transmitted light beam (8) and two receivers (4, 5) - which each receive received light beams (10) - each with a respective upstream first and second linearly polarising element (14, 15), the polarisation directions of the elements being rotated relative to one another through an angle α in the range 45° < α < 135°, and at the other end of which there is arranged a reflector unit (9) consisting of a reflector (17) and an upstream third linearly polarising element (16), the polarisation direction of which substantially corresponds with the polarisation direction of the first or second polarising element (14, 15), **characterised in that** the quotient of the received signals present at the outputs of the receivers (4, 5) is formed and this is evaluated by a threshold value S, and that means (19) for testing the device (1) are provided, by the actuation of which the quotient of the received signals relative to the threshold value S adopts a predetermined value in the case of fault-free operation.

3. Optoelectronic device according to claim 1 or 2, **characterised in that** the testing takes place cyclically.

4. Optoelectronic device according to one of claims 1 to 3, **characterised in that** the testing is carried out by external activation of the means (19) for the testing.

5. Optoelectronic device according to one of claims 1 to 4, **characterised in that** the polarisation directions of the first and second polarising element (14, 15) are rotated relative to one another through α = 90°.

6. Optoelectronic device according to claim 5, **characterised in that** the received light beams (10) are guided by way of a beam dividing, partly transparent mirror (13) to the receivers (4, 5).

7. Optoelectronic device according to claim 6, **characterised in that** a deflecting element, at which the transmitted light beams (8) are reflected so that they are guided parallel to the received light beams (10) in the monitoring region, is arranged in front of the partly transparent mirror (13).

8. Optoelectronic device according to claim 7, **characterised in that** the deflecting element is formed by a partly transparent mirror (13).

9. Optoelectronic device according to one of claims 1 to 8, **characterised in that** a test transmitter (19), the test transmitted light beams (18) of which are directed to the receivers (4, 5), is provided for the testing of the optoelectronic device.

10. Optoelectronic device according to one of claims 7 to 9, **characterised in that** the test transmitted light beams (18) transmitted by the test transmitter (19) are guided to the receivers (4, 5) by way of the partly transparent mirror (13).

11. Optoelectronic device according to claim 9 or 10, **characterised in that** the transmitter (3) is switched off during the testing.

12. Optoelectronic device according to claim 10 or 11, **characterised in that** in the case of fault-free operation thereof during a first test measurement with the transmitter (3) and test transmitter (19) switched off the received signals of the receivers (4, 5) each lie below the threshold value S1.

13. Optoelectronic device according to one of claims 10 to 12, **characterised in that** in the case of fault-free operation thereof during a second test measurement with the transmitter (3) switched off and the test transmitter (19) switched on the received signals of the receivers (4, 5) each lie above the threshold value S2 or the quotient of the received signals of the receivers (4, 5) lies below the threshold value S, wherein the received signal of the receiver (4) is divided by the received signal of the receiver (5).

14. Optoelectronic device according to one of claims 1 to 8, **characterised in that** for the testing thereof the polarisation effect of the polarising element (15) in front of the receiver (5) is variable.

15. Optoelectronic device according to claim 14, **characterised in that** the polarising element (15) is formed by a liquid crystal element.

16. Optoelectronic device according to claim 14 or 15, **characterised in that** in the case of the test measurements the polarisation effect of the polarising element (15) is cancelled.

17. Optoelectronic device according to claim 16, **characterised in that** in the case of fault-free operation thereof during a first test measurement with the transmitter (3) switched off the received signals of the receivers (4, 5) lie below the threshold value S1 and during a second test measurement with the receiver (3) switched on and the beam path free lie above S2, or that the quotient of the received signals of the receivers (4, 5) during the second test measurement lies below the threshold value S, wherein the received signal of the receiver (4) is divided by the received signal of the receiver (5).

18. Optoelectronic device according to one of claims 1 to 17, **characterised in that** the transmitter (3) is formed by a luminescent diode.

19. Optoelectronic device according to one of claims 1 to 17, **characterised in that** the transmitter (3) is formed by a laser, wherein the polarisation direction of the transmitted light beams (8) transmitted by the laser is rotated approximately through 45° with respect to the polarisation direction of the linearly polarising element (16) of the reflector unit (9).

## Revendications

1. Dispositif optoélectronique (1) pour la détection d'objets (2) dans une zone de surveillance, à une extrémité duquel sont disposés un émetteur (3) émettant des rayons lumineux d'émission (8) et deux récepteurs (4, 5) recevant des rayons lumineux de réception (10) précédés chacun d'un premier et d'un deuxième élément polarisant (14, 15) dont les directions de polarisation font entre elles un angle α compris dans la plage 45° < α < 135°, et à l'autre extrémité duquel est disposée une unité de réflexion (9) constituée d'un réflecteur (17) précédé d'un troisième élément de polarisation rectiligne (16) dont la direction de polarisation coïncide globalement avec la direction de polarisation du premier ou du deuxième élément polarisant (14, 15), **caractérisé par le fait que** les signaux de réception disponibles aux sorties des récepteurs (4, 5) sont comparés avec deux valeurs seuils différentes S1 et S2, la valeur seuil S2 étant supérieure à la valeur seuil S1 et leur écart étant choisi de telle sorte que le signal de réception d'un récepteur (4) n'est supérieur à S2 et le signal de réception du deuxième récepteur (5) n'est inférieur à S1 qu'en cas de libre marche des rayons et qu'il est prévu des moyens (19) pour tester le dispositif (1), par l'actionnement desquels, en cas de fonctionnement correct, les signaux de réception des récepteurs (4, 5) prennent des états logiques prédéfinis par rapport aux valeurs seuils S1 et S2.

2. Dispositif optoélectronique (1) pour la détection d'objets (2) dans une zone de surveillance, à une extrémité duquel sont disposés un émetteur (3) émettant des rayons lumineux d'émission (8) et deux récepteurs (4, 5) recevant des rayons lumineux de réception (10) précédés chacun d'un premier et d'un deuxième élément polarisant (14, 15) dont les directions de polarisation font entre elles un angle α compris dans la plage 45° < α < 135°, et à l'autre extrémité duquel est disposée une unité de réflexion (9) constituée d'un réflecteur (17) précédé d'un troisième élément de polarisation rectiligne (16) dont la direction de polarisation coïncide globalement avec la direction de polarisation du premier ou du deuxième élément polarisant (14, 15), **caractérisé par le fait que** l'on forme le quotient des signaux de réception disponibles aux sorties des récepteurs (4, 5), lequel est comparé avec une valeur seuil S, et qu'il est prévu des moyens (19) pour tester le dispositif (1), par l'actionnement desquels, en cas de fonctionnement correct, le quotient des signaux de réception prend une valeur prédéfinie par rapport à la valeur seuil S.

3. Dispositif optoélectronique selon la revendication 1 ou 3, **caractérisé par le fait que** le test est réalisé de manière cyclique.

4. Dispositif optoélectronique selon l'une des revendications 1 à 2, **caractérisé par le fait que** le test est réalisé par activation externe des moyens de test (19).

5. Dispositif optoélectronique selon l'une des revendications 1 à 4, **caractérisé par le fait que** les directions de polarisation du premier et du deuxième élément polarisant (14, 15) font entre elles un angle α = 90°.

6. Dispositif optoélectronique selon la revendication 5, **caractérisé par le fait que** les rayons lumineux de réception (10) sont dirigés vers les récepteurs (4, 5) à travers un miroir séparateur de faisceau semi-transparent (13).

7. Dispositif optoélectronique selon la revendication 6, **caractérisé par le fait qu'**avant le miroir servi-transparent (13) est placé un élément déviateur sur lequel les rayons lumineux d'émission (8) sont réfléchis de telle sorte qu'ils sont guidés parallèlement aux rayons lumineux de réception (10) dans la zone de surveillance.

8. Dispositif optoélectronique selon la revendication 7, **caractérisé par le fait que** l'élément déviateur est formé d'un miroir semi-transparent (13).

9. Dispositif optoélectronique selon l'une des revendications 1 à 8, **caractérisé par le fait qu'**il est prévu pour son test un émetteur de test (19) dont les rayons lumineux de test (18) sont dirigés vers les récepteurs (4, 5).

10. Dispositif optoélectronique selon l'une des revendications 7 à 9, **caractérisé par le fait que** les rayons lumineux de test (18) émis par l'émetteur de test (19) sont guidés vers les récepteurs (4, 5) à travers le miroir semi-transparent (13).

11. Dispositif optoélectronique selon la revendication 9 ou 10, **caractérisé par le fait que** l'émetteur (3) est éteint pendant le test.

12. Dispositif optoélectronique selon la revendication 10 ou 11, **caractérisé par le fait qu'**en cas de fonctionnement correct, pendant une première mesure de test avec l'émetteur (3) et l'émetteur de test (19) éteints, les signaux de réception des récepteurs (4, 5) se situent au-dessous de la valeur seuil S1.

13. Dispositif optoélectronique selon l'une des revendications 10 à 12, **caractérisé par le fait qu'**en cas de fonctionnement correct, pendant une deuxième mesure de test avec l'émetteur (3) éteint et l'émetteur de test (19) allumé, les signaux de réception des récepteurs (4, 5) se situent au-dessus de la valeur seuil S2 ou le quotient des signaux de réception des récepteurs (4, 5) se situe au-dessous de la valeur seuil S, le signal de réception du récepteur (4) étant divisé par le signal de réception du récepteur (5).

14. Dispositif optoélectronique selon l'une des revendications 1 à 8, **caractérisé par le fait que** pour son test l'effet de polarisation de l'élément polarisant (15) situé devant le récepteur (5) est modifiable.

15. Dispositif optoélectronique selon la revendication 14, **caractérisé par le fait que** l'élément polarisant (15) est formé d'un élément à cristaux liquides.

16. Dispositif optoélectronique selon la revendication 14 ou 15, **caractérisé par le fait que** l'effet de polarisation de l'élément polarisant (15) est annulé pendant les mesures de test.

17. Dispositif optoélectronique selon la revendication 16, **caractérisé par le fait qu'**en cas de fonctionnement correct, pendant une première mesure de test avec l'émetteur (3) éteint, les signaux de réception des récepteurs (4, 5) se situent au-dessous de la valeur seuil S1 et pendant une deuxième mesure de test avec l'émetteur (3) allumé et libre marche des rayons au-dessus de S2, ou que le quotient des signaux de réception des récepteurs (4, 5) pendant la deuxième mesure de test se situe au-dessous de la valeur seuil S, le signal de réception du récepteur (4) étant divisé par le signal de réception du récepteur (5).

18. Dispositif optoélectronique selon l'une des revendications 1 à 17, **caractérisé par le fait que** l'émetteur (3) est formé d'une diode électroluminescente.

19. Dispositif optoélectronique selon l'une des revendications 1 à 17, **caractérisé par le fait que** l'émetteur (3) est formé d'un laser, la direction de polarisation des rayons lumineux d'émission (8) émis par le laser faisant un angle d'environ 45° avec la direction de polarisation de l'élément de polarisation linéaire (16) de l'unité de réflexion (9).
